Europäisches Patentamt

European Patent Office

Office européen des brevets

(19)

(11) Publication number: **0 446 944 A2**

# EUROPEAN PATENT APPLICATION

(21) Application number: **91104033.5**

(22) Date of filing: **15.03.91**

(51) Int. Cl.⁵: **H04M 19/00**

(30) Priority: **16.03.90 JP 66701/90**
            **20.03.90 JP 68147/90**

(43) Date of publication of application:
     **18.09.91 Bulletin 91/38**

(84) Designated Contracting States:
     **DE FR GB**

(71) Applicant: **FUJITSU LIMITED**
     **1015, Kamikodanaka Nakahara-ku**
     **Kawasaki-shi Kanagawa 211(JP)**

(72) Inventor: **Itoh, Shinichi**
     **4-8-15-307, Takaidohigashi, Suginami-ku**
     **Tokyo 168(JP)**
     Inventor: **Ayano, Mitsutoshi**
     **1-21-16, Nakano, Nakano-ku**
     **Tokyo 164(JP)**

(74) Representative: **Lehn, Werner, Dipl.-Ing. et al**
     **Hoffmann, Eitle & Partner Patentanwälte**
     **Arabellastrasse 4**
     **W-8000 München 81(DE)**

(54) Feed circuit in exchanger.

(57) A feed circuit (11, 13) in an exchanger supplies DC power to a subscriber line. The DC power is monitored and feedback-controlled so that the DC power can be automatically adjusted. Therefore, the feed circuit can satisfy various user's needs.

## FIG.2

## BACKGROUND OF THE INVENTION

The present invention relates to feed circuits, and more particularly to a feed circuit in an exchanger which supplies DC power to a subscriber line.

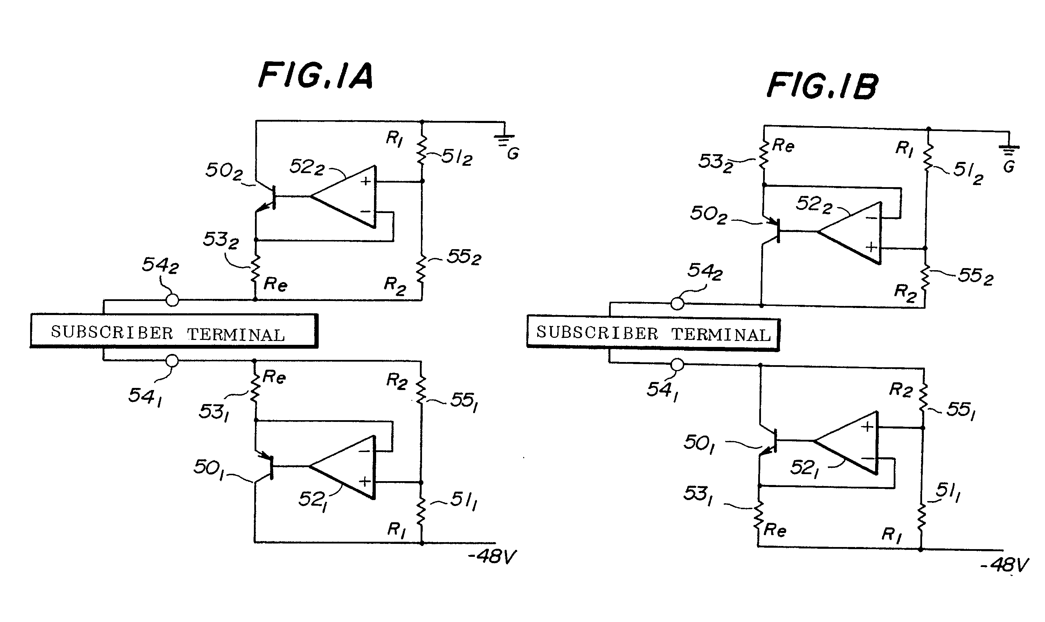

In order to satisfy user's needs, various types of feed circuits in telephone exchangers have been developed. FIG.1A shows a circuitry construction of a conventional so-called voltage driving type feed circuit and, and FIG.1B shows that of a conventional so-called current driving type feed circuit. Both circuits operates in substantially the same manner. The elements in FIG.1B which are the same as corresponding elements in FIG.1A are designated by the same reference numerals. Therefore, a description will be given below with reference to only FIG.1A. A power supply of -48V is connected to a collector of a transistor $50_1$ and a noninverting input of an operational amplifier $52_1$ via a resistor $51_1$ having a resistance of $R_1$. An output of the operational amplifier $52_1$ is connected to a base of the transistor $50_1$. An emitter of the transistor $50_1$ is connected to the inverting input of the operational amplifier $52_1$ and a terminal $54_1$ which is connected to the subscriber line via a resistor $53_1$ having a resistance of $R_e$. The terminal $54_1$ is connected to the noninverting input of the operational amplifier $52_1$ via a resistor $55_1$ having a resistance of $R_2$. Another terminal $54_2$ between the ground G and the subscriber line is connected to a circuit similar to that connected to the terminal $54_1$, so that these elements of the circuit are designated by the same reference numerals each respectively having a subscript "2", and the description thereof will be omitted. Incidentally, the feed circuit in FIG.1B differs from that in FIG.1A in that each of the collectors of the transistors $50_1$ and $50_2$ are respectively directly connected to the terminals $54_1$ and $54_2$.

A description will now be given of the operation of the feed circuit in FIG.1A. Each subscript of the corresponding numeral is omitted. The voltage applied to the terminal 54 is $R_1/(R_1 + R_2)$ times as strong as that applied thereto via only the resistor 51, and the composite resistance of the feed circuit viewed from the terminal 54 becomes $R_e^*(R_1 + R_2)/R_2$. In $R_1 = 30$ KΩ, $R_2 = 10$ kΩ, $R_e = 50$Ω, it is 200Ω, which reveals the constant-resistance characteristic. Incidentally, if a constant-voltage diode is connected to the resistor 55 in a parallel manner, a loop current flowing in a loop circuit constituted by the operational amplifier 52 and the resistor 53 becomes constant, which exposes the constant-current characteristic. However, the conventional feed circuit has the following disadvantage namely that as other elements should be added thereto every time there is a different need of a user so that it cannot be standardized for the various user's various needs.

## SUMMARY OF THE INVENTION

Accordingly, it is a general object of the present invention to provide a feed circuit in which the above disadvantage is eliminated.

Another object of the present invention is to provide a feed circuit which can be standardized to satisfy various user's various needs.

The more specific object of the present invention is to provide a feed circuit in an exchanger comprises feeding means for supplying DC power to a subscriber line, and feeding control means, coupled to the feeding means, for monitoring the DC power outputted from said feeding means to the subscriber line and for feedback-controlling said feeding means so that the DC power supplied from said feeding means can be automatically adjusted.

According to the present invention, since the feeding control means can automatically adjust the DC power by means of the feedback control every time there is a different need of a user, the feed circuit can be standardized for various user's needs.

Other objects and further features of the present invention will be apparent from the following description when read in conjunction with the accompanying drawings.

## BRIEF DESCRIPTION OF THE DRAWINGS

FIGs.1A and 1B respectively show circuitry constructions of conventional feed circuits;

FIG.2 shows a block diagram for explaining a principle of a feed circuit according to the present invention;

FIGs.3A and 3B respectively show the circuitry construction of the feed circuit in FIG.2;

FIGs.4A and 4B are flowcharts showing how DC power supplied by the feed circuit in FIG.2 can be adjusted;

FIG.5 shows a concrete block diagram of the feed circuit in FIG.2;

FIG.6 shows a first circuitry construction of the feed circuit in FIG.5;

FIG.7 shows a second circuitry construction of the feed circuit in FIG.5;

FIG.8 shows a relationship between a voltage applied to a telephone line and a line-insulation resistance thereof;

FIG.9 shows a relationship between a current fed and the line-insulation resistance;

FIG.10 shows an example of a circuitry construction of a control circuit of the feed circuit in FIG.5;

FIG.11 shows a time chart showing the operation of the control circuit in FIG.10;

FIG.12 shows another example of the circuitry construction of the control circuit of the feed circuit in FIG.5;

FIGs.13 to 15 respectively show examples of driving and switching circuits of the feed circuit in FIG.5; and

FIG.16 shows a flowchart showing how the DC power in the feed circuit in FIG.2 reveals the same characteristic as that revealed in the feed circuit in FIG.5.

DESCRIPTION OF THE PREFERRED EMBODIMENTS

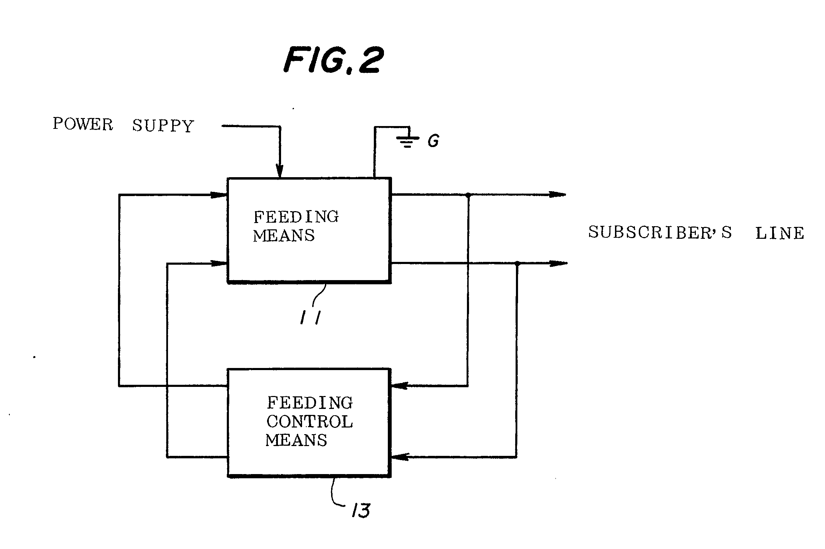

A description will now be given of the feed circuit in the telephone exchanger according to the present invention with reference to FIGs.2 to 5. FIG.2 shows a block diagram for explaining the principle of the feed circuit. The feed circuit comprises, as shown in FIG.2, feeding means 11 and feeding control means 13. The feeding means 11 supplies the DC power to the subscriber line, and the DC power is adjusted based on the feedback voltage supplied from the feeding control means 13. The feeding means 13 obtains the DC power from joint points via a A/D convertor. The feeding control means 13 calculates the feedback voltage appropriate to a user's need by means of an operation process to fed it back to the feeding means 11 via a D/A convertor. Therefore, no additional element is required for the feed circuit to supply various user's various needs.

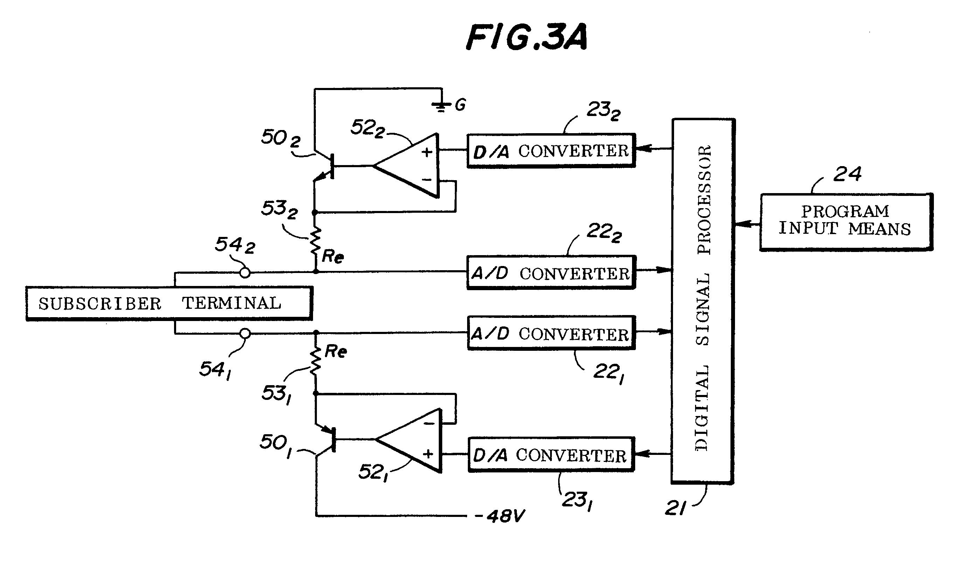

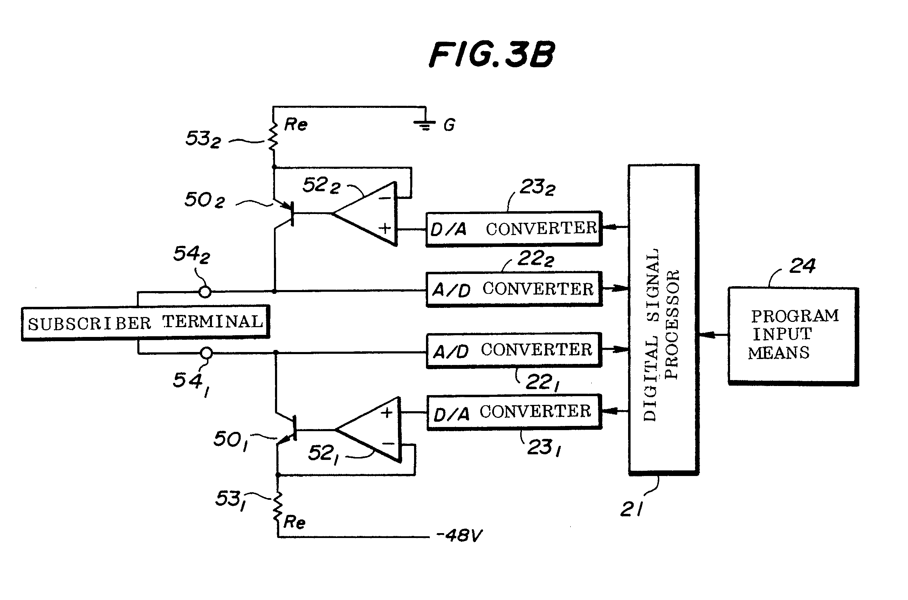

FIGs.3A and 3B respectively show the circuitry constructions of the feed circuit in FIG.2. However both circuits operates in substantially the same manner. The feed circuit in FIG.3A corresponds to that in FIG.1A, and that in FIG.3B corresponds to that in FIG.1B. Those elements in FIG.3A which are the same as corresponding elements in FIG.3B are designated by the same reference numerals, and a description thereof will be omitted. The circuit in FIG.3A differs from that in FIG.1A in that a digital signal processor 21 in FIG.3A serves as the resistors $55_1$ and $55_2$ in FIG.1A to control the feeding means 11 by means of the digital operation process. However, A/D converters $22_1$ and $22_2$, D/A converters $23_1$ and $23_2$, and the program input means 24 must be added to the feed circuit in FIG.3A. The program input means 24 inputs a predetermined program appropriate to the user's need to the digital signal processor 21. The program input means 24 may be a read only memory (abbreviated ROM hereinafter) which stores some programs therein.

A description will now be given of the operation of the feed circuit in FIG.3A. A circuit connected to the power supply is the same as the circuit grounded, and the subscript of the reference numerals thereof will be omitted. The voltage outputted from the terminal 54 is converted into a digital signal by the A/D converter 22, and is inputted to the digital signal processor 21. The digital signal processor 21 determines a predetermined feedback voltage based on the predetermined program, and outputs a digital signal corresponding to the feedback voltage to the D/A converter 23. The D/A converter 23 generates the feedback voltage and inputs it to the noninverting input of the operational amplifier 52.

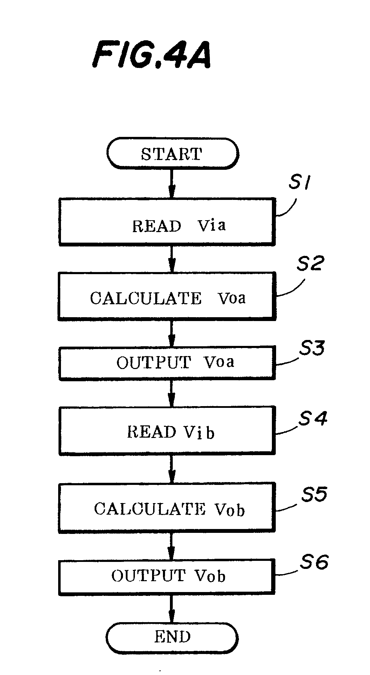

FIG.4A shows a flowchart of the digital operation process executed by the digital signal processor 21 so that the DC power supplied from the feed circuit can reveal the constant-resistance characteristic. The digital signal processor 21 reads DC voltages $V_{ia}$ and $V_{ib}$ outputted from the feeding means 11 via the A/D converter 22 (in steps S1 and S4). In response to the DC voltages, it calculates respective feedback voltages $V_{oa}$ and $V_{ob}$ based on the predetermined program by means of the following equation (in steps S2 and S5): $(V_{oa}, V_{ob}) =$ $(V_{ia}, V_{ib})^*[R_1/(R_1 + R_2)]$. Hereupon, the $[R_1/(R_1 + R_2)]$ indicates a feedback voltage ratio. Then, it transmits the feedback voltages to the D/A converter 23 (in steps S3 and S6).

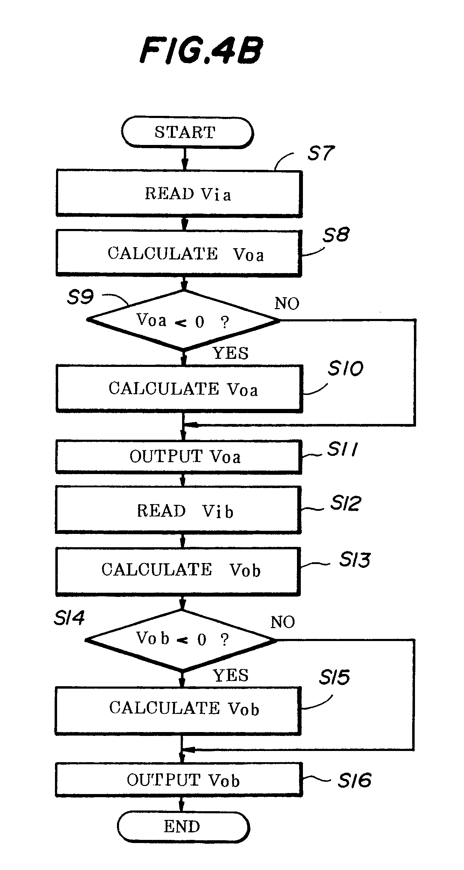

FIG.4B shows another flowchart executed by the digital signal processor 21 so that the DC power supplied from the feed circuit can reveal the constant-current characteristic. The digital signal processor 21 reads the DC voltages (in steps S7 and S12), and subsequently, it calculates the feedback voltages by the following equation (in steps S8 and S13): $(V_{oa}, V_{ob}) = (V_{ia}, V_{ib})-(a$ predetermined value). Hereupon the predetermined value is determined by (a desired constant current value)$^*R_e$. Then, this processor transmits the feedback voltages to the D/A converter 23 (in steps S11 and S16). However, if each feedback voltage is less than zero, the processor performs the same operations as are performed in the steps S2 and S5 (in steps S9, S10, S14, and S15) so as to supply the desired constant current. The desired current value corresponds to the voltage drop at the resistor 53. For example, (the voltage drop) = 2V in (the desired constant current value) = 40mA, and (the resistance $R_e$ of the resistor 53) = 50Ω.

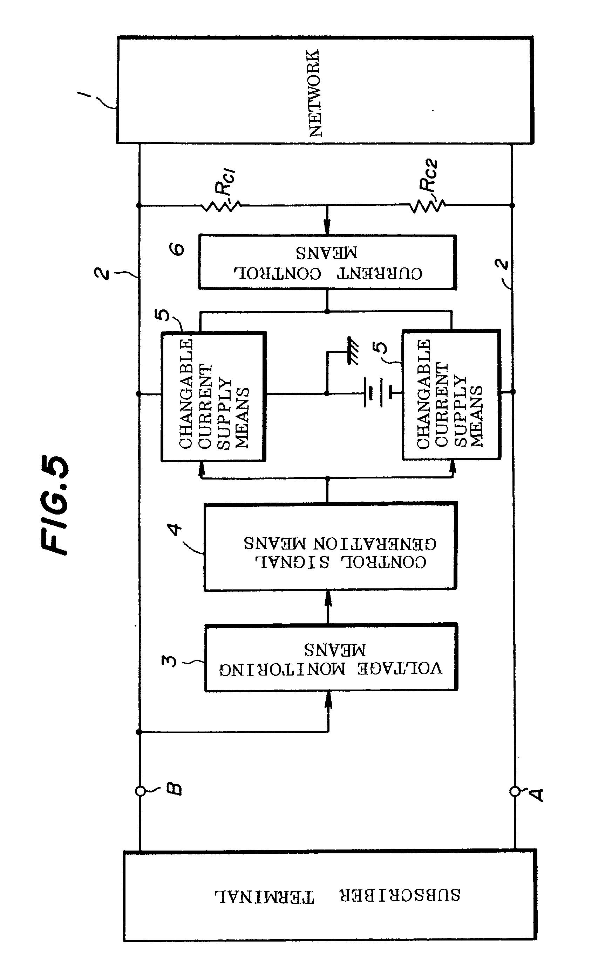

A more concrete description will now be given of a feed circuit according to the present invention than that shown in FIG.2 with reference to FIGs.5 to 15. FIG.5 shows a concrete block diagram of the feed circuit. The feed circuit comprises, as shown in FIG.5, voltage monitoring means 3, control signal generation means 4, and changable current supply means 5. The network 1 is connected to a pair of telephone lines 2. The telephone lines 2 are shorted out by resistors $R_{c1}$ and $R_{c2}$. The voltage at a joint point of the resistors $R_{c1}$ and $R_{c2}$ is applied to the current control means 6. The voltage monitoring means 3 monitors the voltage applied to one of the telephone lines 2 to output a detecting signal corresponding to the voltage to the control signal generation means 4. The control signal generation means 4 generates the control signal corresponding to the detecting signal to transmit it to the changable feeding means 5. Various circuits used for the network 1 may be connected to terminals A and B.

If a first line having a predetermined line-insulation resistance is connected to the terminals A and B, the voltage monitoring means 3 does not output the detecting signal to the control signal generation means 4. However, if a second line having a line-insulation resistance higher than that of the first line is substituted for the first line, the voltage monitoring means 3 outputs the detection signal to the control signal generation means 4, and the control signal generation means 4 outputs the control signal to the changable feeding means 5. As a result, the changable current supply means 5 changes the resistance thereof to decrease the current. If the current is still larger, the changable feeding means 5 continuously decreases the current. Thus, the extra current is lessened to the desired current value. On the other hand, if a third line having a line resistance lower than the first line is substituted for the first line, the current is increased to the desired current value by the same operation described above.

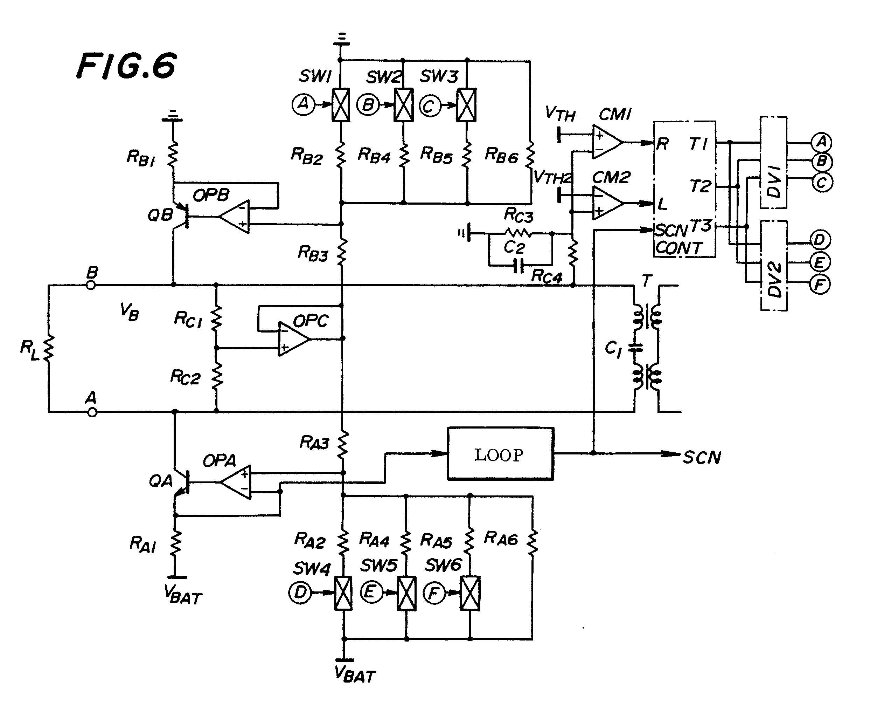

FIG.6 shows a first circuitry construction of the feed circuit in FIG.5. The transformer T is coupled to a switching network (not shown), and primary coils thereof are connected to the terminals A and B via a pair of telephone lines having the line-insulation resistance RL. The transformer T may comprise a hybrid coil or a repeating coil. Since a capacitor $C_1$ of the transformer T alternately connects the divided primary coils, DC is prevented from being supplied to the primary coils. The feed circuit supplies the constant current to the subsciber terminal.

The feed circuit comprises operational amplifiers OPA, OPB, and OPC (simply referred to as OPA, OPB, and OPC hereinafter), a NPN type transistor QA, a PNP transistor QB, and resistors $R_{A1}$ to $R_{A6}$, $R_{B1}$ to $R_{B6}$, and $R_{C1}$ to $R_{C4}$. The resistors $R_{A2}$, $R_{A4}$, and $R_{A5}$ are respectively directly connected to a power supply $V_{BAT}$ via switching circuits SW4, SW5, and SW6. The resistors $R_{B2}$, $R_{B4}$, and $R_{B5}$ are respectively grounded via switching circuits SW1, SW2, and SW3. Incidentally, a plus terminal of the $V_{BAT}$ is grounded.

On the other hand, one of the telephone lines is connected to minus input terminals of comparators CM1 and CM2 via the resistance $R_{C4}$, and is grounded via the resistors $R_{C3}$ and $R_{C4}$ and the capacitor $C_2$. The resistor $R_{C3}$ and the capacitor $C_2$ are connected in parallel. A plus input terminal of the comparator CM1 and a minus input terminal of the comparator CM2 are respectively connected to the threshold voltages $V_{TH1}$ and $V_{TH2}$. The outputs of the comparators CM1 and CM2 are respectively connected to R and L input terminals of the control circuit (abbreviated CONT hereinafter), and outputs T1, T2, and T3 of the CONT are connected to the control signal input terminals of the switching circuits SW1 to SW6 (simply referred to as SW1 to SW6 hereinafter) via driving circuits DV1 and DV2 (simply referred to as DV1 and DV2). The loop monitoring circuit (abbreviated LOOP hereinafter) monitors a dial pulse or the ON/OFF condition of a handset of the telephone so as to transmit the pertinent information to the CONT, or to a CPU (not shown) via a scanner.

A description will now be given of an operation of the feed circuit of this embodiment. In $R_{B1} = R_{A1}$, $R_{B6} = R_{A6}$, and $R_{B3} = R_{A3}$, the output of the OPC is $V_{BAT}/2$. If the SW1 to SW6 are respectively opened, $(R_{B6} + V_{BAT})/[2(R_{B6} + R_{B3})]$ and $[V_{BAT}{}^* (R_{A6} + 2{}^* R_{A3})]/[2{}^* (R_{A6} + R_{A3})]$ are respectively applied to the plus terminals of the OPA and OPB. Consequently, the voltage applied to the plus input terminal of the OPA is the same as that applied to the minus input terminal of the OPB. Therefore, the collector currents of the transistors QA and QB respectively become $(R_{B6}{}^* V_{BAT})/[2{}^* (R_{B6} + R_{B3}){}^* R_{B1}]$ and $(R_{A6}{}^* V_{BAT})/[2{}^* (R_{A6} + R_{A3}){}^* R_{A1}]$. Therefore, the corrector currents of the $Q_A$ and $Q_B$ have the same value. That is, the current outputted from the $Q_A$ is inputted to the $Q_B$. The currents of the $Q_A$ and $Q_B$ become constant irrespective of the line-insulation resistance RL, which exposes the constant-current characteristic. The SW1 to SW6 respectively connect the respective resistors $R_{B6}$ and $R_{A6}$ to one or some of the resistors $R_{B2}$, $R_{B4}$, $R_{B5}$, $R_{A2}$, $R_{A4}$, and $R_{A5}$. Therefore, the composite resistance decreases to change the constant current value

In this embodiment, the voltage $V_B$ of the terminal B is monitored by the comparators CM1 and CM2 via a low pass filter circuit comprising the resistors $R_{C3}$, $R_{C4}$, and the capacitor $C_2$. The CM1 judges whether or not the voltage $V_B$ is more than the threshold $V_{TH1}$, and the CM2 judges whether or not the voltage $V_B$ is less than the threshold $V_{TH2}$. As a result, the CM1 outputs a first detecting signal to the CONT so as to increase the current value if it judges the line-insulation resistance RL is too small. The CM2 outputs a second detecting signal to the CONT so as to decrease the current value if it judges the line-insulation resistance RL is too large.

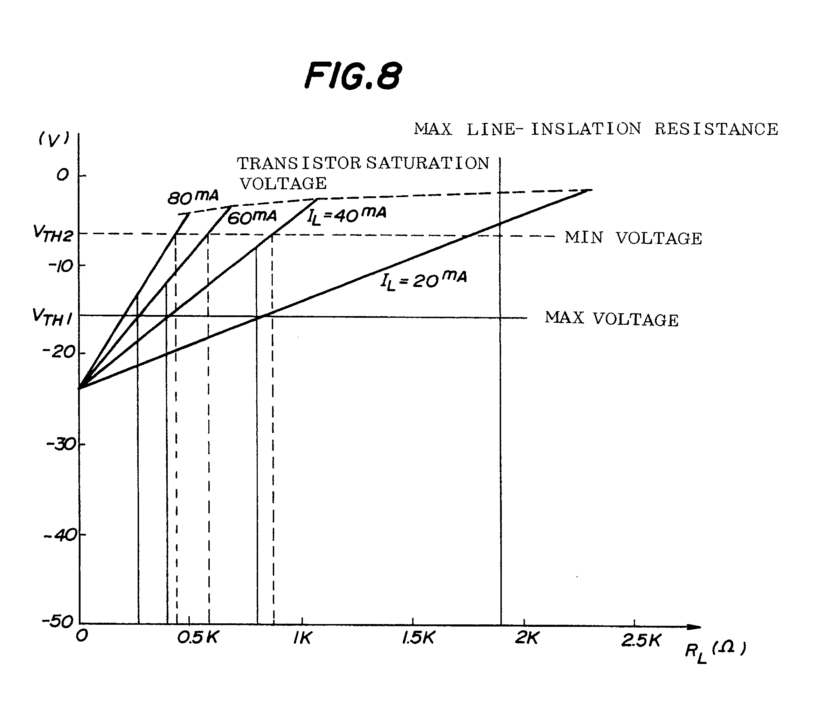

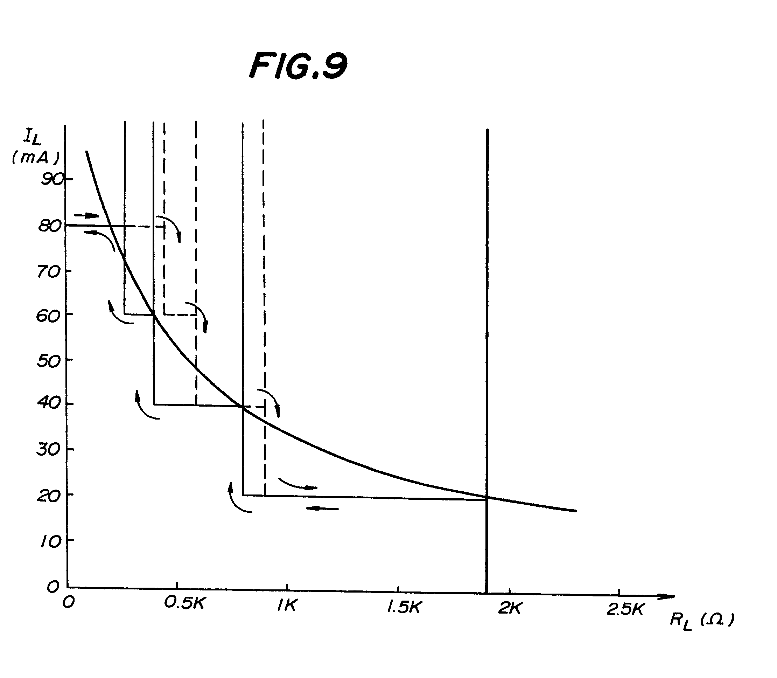

A description will now be given of an operation of the CONT with reference to FIGs.8 and 9. It is assumed that the voltage $V_{BAT}$ is -48V, the maximum line-insulation resistance is 1900Ω, four constant current values are respectively 20mA, 40mA, 60mA, and 80mA, $V_{TH1}$ is 16V, and $V_{TH2}$ is 6.5V. If the line having a line-insulation resistance 600 , is initially connected to this feed circuit and the handset of the telephone is raised up, the LOOP outputs off hook information to the CONT and the scanner. Incidentally, the SW1 to SW6 are all initially opened.

Though the feed circuit supplies the current 20mA to the terminals A and B, the CM1 outputs the first detecting signal to the CONT since the voltage $V_B$ is higher than $V_{TH1}$. The CONT closes the SW1 and SW4 via the DV1 and DV2 in response to the first detecting signal. The resistors $R_{B2}$, $R_{B4}$, $R_{B5}$, and $R_{B6}$ are connected in parallel with each other until the CM1 outputs the first detecting signal to the CONT. But the resistor $R_{B2}$ is separated from other resistors $R_{B4}$, $R_{B5}$, and $R_{B6}$ by means of the SW1. Since the composite resistance increases, the voltage applied to the plus input terminal of the OPB becomes higher than the ground, and the voltage applied to the plus input terminal of the OPA is higher than the $V_{BAT}$. Thus, the collector currents of the QA and QB increase to 40mA, and the voltage $V_B$ becomes 12.5V. Since the CM1 and CM2 stop outputting the first and second detecting signals, the CONT keeps the SW1 and SW4 closed.

Subsequently, if the line having the line-insulation resistance 0Ω is connected, CM1 outputs the first detecting signal to the CONT, and the CONT closes the SW2 and SW5 via the DV1 and DV2. In this case, the CONT sets the current value at 60mA. However, since the current value 60mA is not enough, the CM1 continues to output the first detecting signal. Accordingly, the CONT resets the current value at 80mA, nevertheless as the current value 80mA is not enough, the CM1 continues to output the first detecting signal. But, in this case, the CQNT ignores the first detecting signal, and keeps the operational condition of the feed circuit. Next, if a line having the line-insulation resistance 1500Ω is connected, the CM2 outputs the second detecting signal to the CONT. In response to the second detecting signal, the CONT closes the SW3 and SW6 via the DV1 and DV2, and the CONT sets the current value at 60mA. Since the current value is not enough, the CM2 continues to output the second detecting signal, and thus the CONT resets the current value at 40mA. However, as the current value is not yet enough, the CM2 continuously outputs the second detecting signal. Finally, the CONT resets the current value at 20mA. As a result, since the CM1 and CM2 do not output the first and second detecting signals, the CONT keeps the SW1 to SW6 open. Thus, the desired constant current corresponding to the line-insulation resistance is set by the CONT so that the feed circuit can reveal the almost constant-resistance characteristic. The current value may be changed.

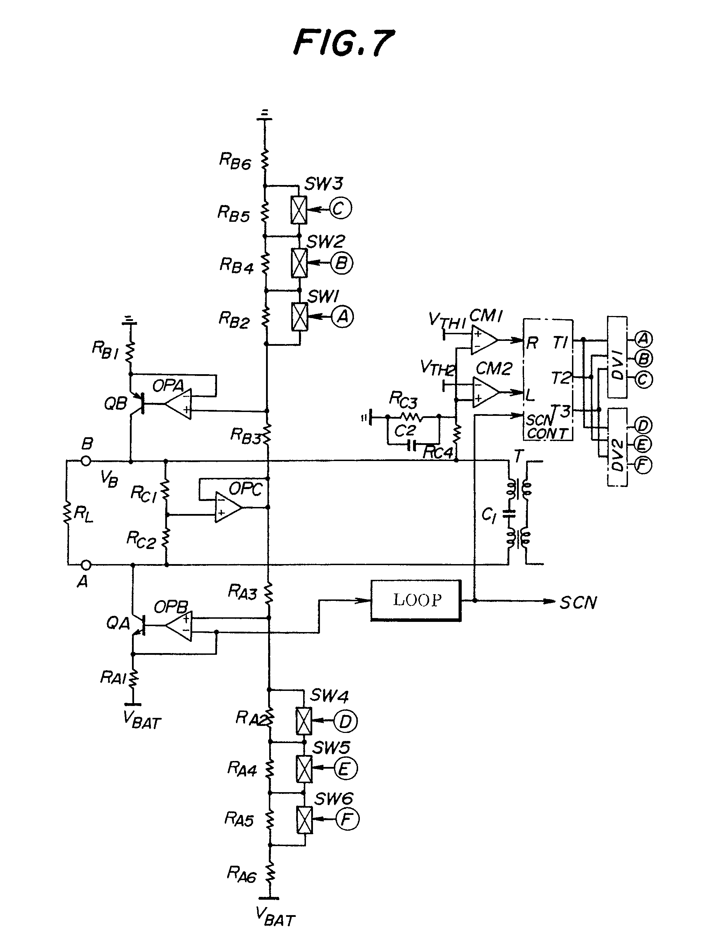

FIG.7 shows a second circuitry construction of the feed circuit in FIG.5. The second circuitry construction thereof differs from the first one in that the resistors $R_{B2}$, $R_{B4}$, $R_{B5}$, $R_{B6}$, $R_{A2}$, $R_{A4}$, $R_{A5}$, and $R_{A6}$ are directly connected. Therefore, the switching operation is different, needless to say. If the constant current value is 20mA, all switching circuits must be initially closed. Each switching circuit may comprise an analog switch, such as a relay or a CMOS.

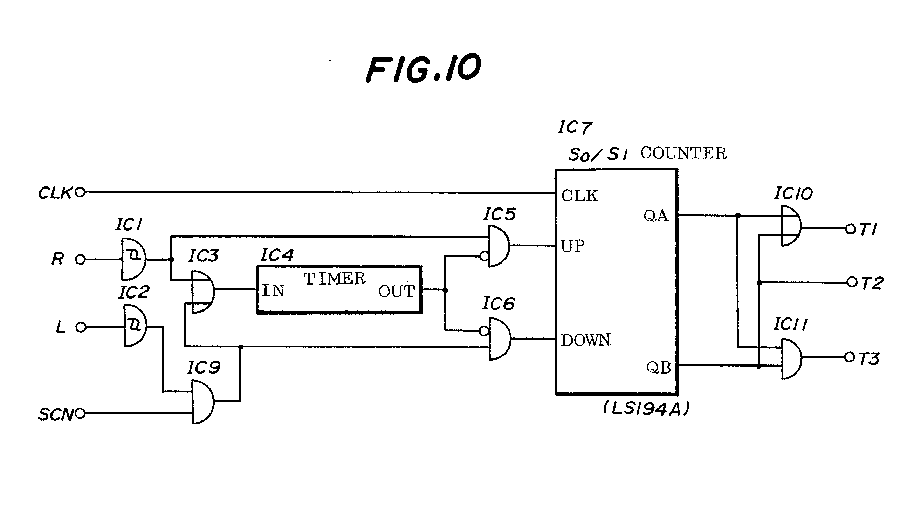

FIG.10 shows an example of the circuitry construction of the CONT. Buffers IC1 and IC2 are constructed by the schmitt trigger circuit. One input terminal of an AND gate IC9 is connected to the buffer IC2, and another input terminal thereof is connected to the output of the LOOP. The output thereof is connected to an OR gate IC3 and one input terminal of an AND gate IC6. The output of the buffer IC1 is connected to another input terminal of the OR gate IC3 and one input terminal of an AND gate IC5. The output of the OR gate IC3 is connected to an input terminal of the timer IC4, and the output of the timer IC4 is connected to respective input terminals of the AND gates IC5 and IC6 via inverters. The output of the AND gate IC5 is connected to a mode select terminal $S_0$ of a both-way shift register (74LSI94A), which is indicated as an up/down counter in FIG.10. The output of the AND gate IC6 is connected to another mode select terminal $S_1$ of the both-way shift register IC7, and a clock generator (not shown) transmits the clock signal (8KHz) to a clock input terminal thereof. The parallel outputs $Q_A$ and $Q_B$ are connected to the terminals T1, T2 and T3. The outputs of terminals T1, T2, and T3 are directly supplied to the DV1 and DV2 in the feed circuit shown in FIG.6, whereas those are supplied to the DV1 and DV2 via inverters in the feed circuit shown in FIG.7.

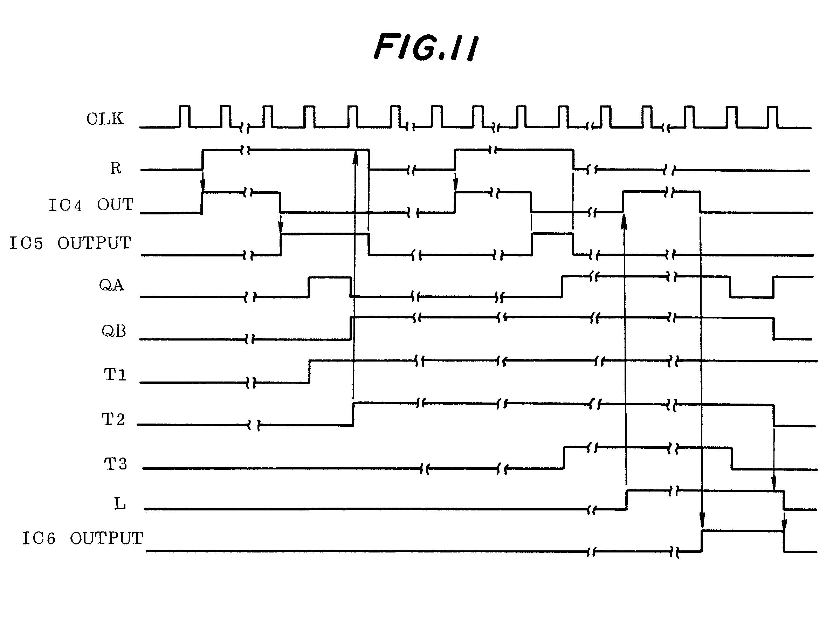

FIG.11 shows a time chart showing the operation of the CONT in FIG.10. When a signal "1" (simply referred to as "1") is inputted to the R input terminal, it outputs a signal to the timer IC4 to drive the timer IC4 via the buffer IC1 and the OR gate IC3. Since the voltage $V_B$ changes greatly based on the dial signal, the timer outputs an output signal to the AND gates IC5 and IC6 after 1 second to prevent the malfunctioning of the CONT. In response to the output signal, the AND gate IC5 outputs "1" to the both-way shift register IC7 to shift it to the right and make it output the "1" to the terminal T1. Even if the R input terminal still remains at "1" after the "1" output to the terminal T1, the next clock outputs the "1" to the parallel outputs T1 and T2. Then, when the R input terminal becomes "0", the both-way shift register stops operating since the AND gate IC5 becomes "0". If the handset is hooked, a SCN signal which is the output of the LOOP becomes "0" and the L input terminal becomes "1". However, the both-way shift register IC7 does not operates since the output of the AND gate IC9 still remains "0". If the line having the line-insulation resistance 0Ω is connected and the handset is raised, the signal is inputted from the R input terminal to the timer IC4 in response to the R input terminal set at "1". After 1 second, the timer IC4 outputs the output signal to the AND gate IC5, and it outputs the "1". Thus, the both-way shift register IC7 is shifted to the right to output "1" to the terminal T3. In response to the R input terminal set at "0", the AND gate IC5 outputs "0" to stop the operating of the both-way shift register IC7.

Next, if a line having the line-insulation resistance 600Ω, is connected, "1" is inputted to the L input terminal and the SCN signal becomes "1" when the handset is raised. Consequently, "1" is outputted from the AND gate IC9. Therefore, the timer IC4 is driven via the OR gate IC3. After 1 second, the timer outputs the output signal and the AND gate IC6 outputs "1" to shift the both-way shift register IC7 to the left. The both-way shift register IC7 outputs "0" to the terminal T3. If the L input terminal still remains set at "1", the next clock outputs "0" to the terminals T2 and T3. In response to the L input terminal set at "0", the both-way shift register IC7 stops operating since the AND gate IC6 outputs "0".

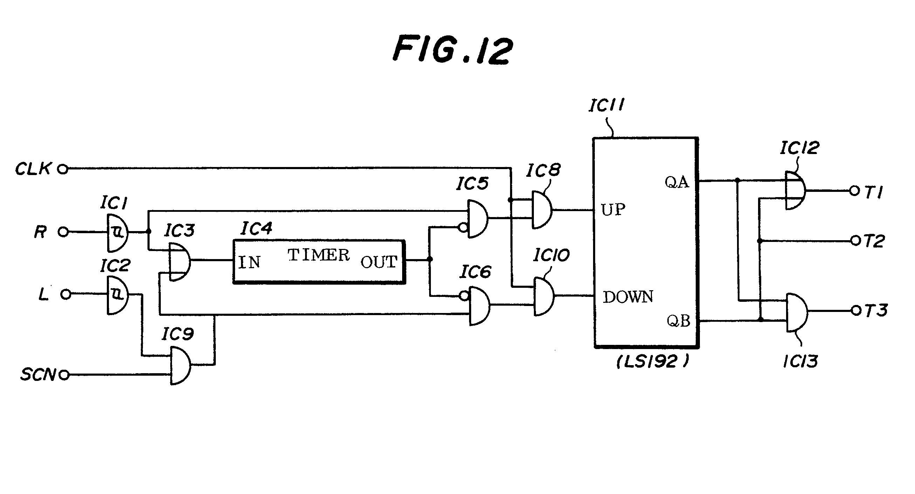

FIG.12 shows another example of the circuitry construction of the CONT. The buffers IC1 and IC2 are respectively constructed by the schmitt trigger circuits, and the output of the buffer IC2 is inputted to one input terminal of the AND gate IC9. The SCN signal is inputted to another input terminal of the AND gate IC9. The output of the AND gate IC9 is connected to input terminals of the OR gate IC3 and the AND gate IC6. The output of the buffer IC1 is connected to one input terminal of the AND gate IC5. The output of the OR gate IC3 is inputted to the input terminal of the timer IC4. The output of the timer IC4 is connected to the input terminals AND gates IC5 and IC6 via the inverters. The respective outputs of the AND gate IC5 and IC6 are respectively connected to the respective input terminals of the AND gates IC8 and IC10. The other input terminals of the AND gates IC8 and IC10 are respectively connected to a clock generator (not shown) so that the clock signal (8KHz) is inputted to each of the input terminals thereof. The output of the AND gate IC8 is connected to a count up terminal UP of the up/down counter (74LSI192) IC11, and the output of the AND gate IC10 is connected to a count down terminal DOWN of the up/down counter IC11. The output $Q_A$ of the up/down counter IC11 is connected to one input terminal of the AND gate IC13 so that the output $O_B$ of the up/down counter IC11 is connected to input terminals of the OR gate IC12 and the AND gate IC13. The output of the OR gate IC12 is connected to the terminal T1, and the output of the AND gate IC13 is connected to the terminal T3. Thus, the terminals T1, T2, and T3 are connected to the DV1 and DV2. The outputs from the terminals T1, T2, and T3 in FIG.6 are directly inputted to the DV1 and DV2, whereas those in FIG.7 are inputted via the inverters.

When "1" is inputted to the R input terminal, the signal is inputted to the timer IC4 to drive it via the buffer IC1 and the OR gate IC3. The timer outputs the output signal 1 second after the time it is driven, and the AND gate IC5 outputs "1" to the AND gate IC8 to open the AND gate IC8. Thus, the clock signal is inputted to the count up terminal up via the AND gate IC8. As a result, the up/down counter IC11 counts up, and the output terminal $Q_A$ thereof becomes "1" whereas the output terminal $Q_B$ thereof "0". Therefore, only the terminal T1 outputs "1" . If the R input terminal still remains at "1", the output terminal $Q_A$ becomes "0" and the output terminal $Q_B$ becomes "1" because of the next clock "1" outputted to the terminals T1 and T2. In response to the R input terminal set at "0", the AND gate IC5 becomes "0" to interrupt the clock signal transmitted from the AND gate IC8. If the handset is hooked, the SCN signal becomes "0" and the L input terminal becomes "1". However, the up/down counter IC11 does not operate since the AND gate IC 9 remains "1".

Subsequently, if the line having a line-insulation resistance 0Ω is connected and the handset is raised, "1" is inputted to the R input terminal to drive the timer IC4. After 1 second, the timer IC4 outputs the output signal and the AND gate IC5 outputs "1". Then the up/down counter IC11 counts the clock signal again. As a result, the terminals $Q_A$ and $Q_B$ output "1" respectively to the terminals T1, T2, and T3. In response to the R input terminal set at "0", the AND gate IC5 becomes "0" and the clock signal transmitted from the AND gate IC8 is interrupted.

Subsequently, if a line having the line-insulation resistance 600Ω is connected, "1" is inputted to the L input terminal. When the handset is raised, the SCN signal becomes "1" and the AND gate IC9 outputs "1". Consequently, the timer IC4 is driven. After 1 second, the timer IC4 outputs the output signal and the AND gate IC6 outputs "1" to open the AND gate 10. Thus, the clock signal is inputted to the count down terminal DOWN via the AND gate IC10. The up/down counter IC11 counts down the clock signal, and the terminal $Q_A$ outputs "0" and the terminal QB outputs "1". The terminal T3 becomes "0". If the L input terminal remains "1" even when the terminal T3 becomes "0", the next clock outputs "0" to the terminals T2 and T3. In response to the L input terminal set at "0" , the AND gate IC6 outputs "0" to interrupt the clock signal transmitted from the AND gate IC10.

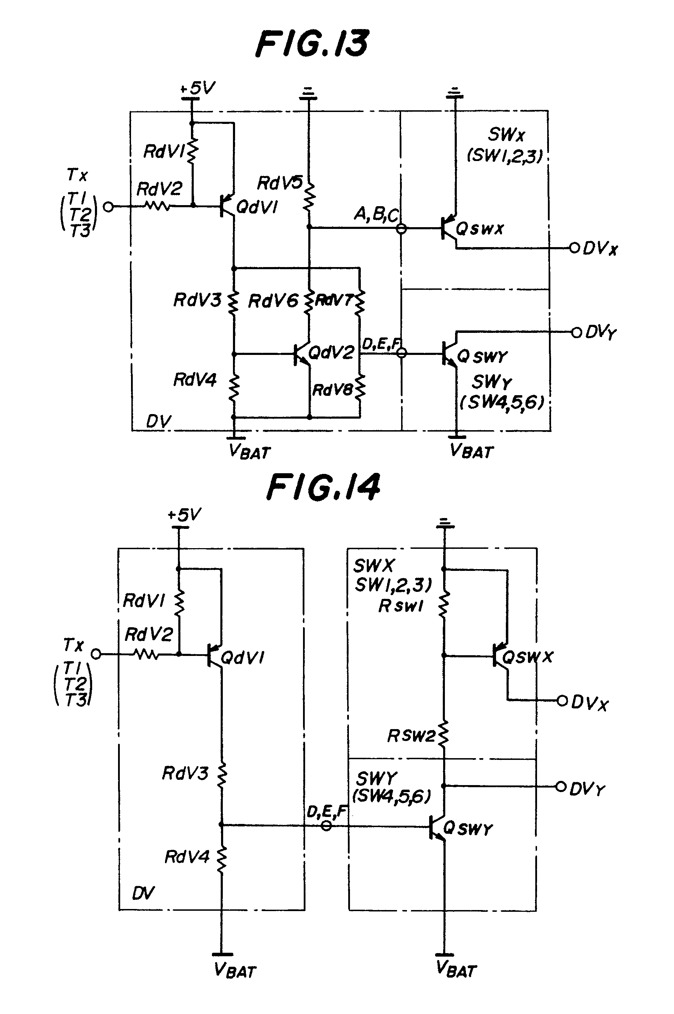

FIG.13 shows the respective circuitry construction of the DV1, DV2, and the switching circuits SW1 to SW6. The feed circuits respectively indicated in FIGs.6 and 7 use three circuits shown in FIG.13. The terminal Tx is connected to terminals T1, T2, and T3. The terminal DVx is connected to one of the resistors $R_{B2}$, $R_{B4}$, and $R_{B5}$. The terminal DVy is connected to one of the resistors $R_{A2}$, $R_{A4}$, and $R_{A5}$. The terminal Tx is connected to one end of the resistor $R_{dV2}$, and another end thereof is connected to a base of the transistor $Q_{dV1}$. The base of the transistor $Q_{dV1}$ is connected to a plus terminal of the power supply (5V). An emitter of the transistor $Q_{dV1}$ is connected to the plus terminal of the power supply. On the other hand, the collector of the transistor $Q_{dV1}$ is connected to $V_{BAT}$ via the resistors $R_{dV3}$ and $R_{dV4}$, and the joint point of the resistors $R_{dV3}$ and $R_{dV4}$ is connected to the base of the transistor $Q_{dV2}$. The emitter of the transistor $Q_{dV2}$ is connected to the $V_{BAT}$, and the collector of the transistor $Q_{dV2}$ is grounded via the resistors $R_{dV6}$ and $R_{dV5}$. The joint point of the resistors $R_{dV6}$ and $R_{dV5}$ is connected to the base of the transistor $Q_{SWX}$. The emitter of the transistor $Q_{SWX}$ is grounded, and the collector thereof is connected to the terminal DVx. The collector of the transistor $Q_{dV1}$ is connected to the $V_{BAT}$ via the resistors $R_{dV7}$ and $R_{dV8}$, and the joint point of the and resistors $R_{dV7}$ and $R_{dV8}$ is connected to the base of the transistor $Q_{SWY}$. The emitter of the transistor $Q_{SWY}$ is connected to the $V_{BAT}$, and the collector thereof is connected to the terminal Dvy. When "0" is inputted to the terminal Tx, the current is supplied to the base of the transistor $Q_{dV1}$ via the resistor $R_{dV2}$ to switch an the transistor $Q_{dV1}$. Then the base current is supplied to the transistor $Q_{dV2}$ to switch on the transistor $Q_{dV2}$. Thus, the transistor $Q_{SWX}$ is switched on.

On the other hand, the current is supplied to the base of the transistor $Q_{SWY}$ via the resistor $R_{dV7}$ in response to the switching on of the transistor $Q_{dV1}$ so that transistor $Q_{SWY}$ is switched on. When the terminal Tx becomes "1", the transistor $Q_{dV1}$ is switched off, and thus the transistor $Q_{dV2}$ is switched off. Subsequently, the transistor $Q_{SWY}$ is switched off. Thus, the terminal DVx is shorted out to be grounded or opened, and the terminal DVy is shorted out of the $V_{BAT}$ or opened because of input information which is inputted to the terminal Tx to switch the driving circuit and the switching circuit.

In this case, the transistor $Q_{SWX}$ corresponds to the SW1 to SW3, and the transistor $Q_{SWY}$ corresponds to the SW4 to SW6. Incidentally, the DV1 and DV2 are combined in FIG.13.

FIG.14 shows a detailed circuit constructions of the DV1, DV2, and SW1 to SW6. The second and third embodiments in FIGs.6 and 7 use three pairs of circuit shown in FIG.14 .

A terminal Tx is respectively connected to the terminals T1, T2, and T3 of the CONT. The terminal DVx is connected to one of the resistors $R_{B2}$, $R_{B4}$, and $R_{B5}$. The terminal DVy is connected to one of the resistances $R_{A2}$, $R_{A4}$, and $R_{A5}$. The terminal Tx is connected to one end of the resistance $R_{dV2}$, and another end thereof is connected to a base of the transistor $Q_{dV1}$. The base of the transistor $Q_{dV1}$ is connected to a plus terminal of the power source (5V). And an emitter of the transistor $Q_{dV1}$ is connected to the plus terminal of the power source. On the other hand, the collector of the transistor $Q_{dV1}$ is connected to the $V_{BAT}$ via the resistances $R_{dV3}$ and $R_{dV4}$, and the joint point of the resistances $R_{dV3}$ and $R_{dV4}$ is connected to the base of the transistor $Q_{SWX}$. The emitter of the transistor $Q_{SWX}$ is connected to the $V_{BAT}$, and the collector of the transistor $Q_{SWY}$ is connected to the transistor $Q_{SWX}$ via the resistance $R_{SW2}$ and to the terminal DVy.

The base and emitter of the transistor $Q_{SWX}$ are grounded, and the collector thereof is connected to the terminal DVx.

When "0" is inputted to the terminal Tx, the base current is supplied to the transistor $Q_{dV1}$ via the resistance $R_{dV2}$, so that the transistor $Q_{dV1}$ switched on. Then the current is supplied to the base of the transistor $Q_{SWY}$ to switch it on. Thus, the base current of the transistor $Q_{SWX}$ is supplied via the resistance $R_{SW2}$, and the transistor $Q_{SWX}$ is switched on.

When "1" is inputted to the terminal Tx, both the transistor $Q_{dV1}$ and the transistor $Q_{SWY}$ are switched off. Subsequently, the transistor $Q_{SWX}$ is switched off.

Thus, the terminal DVx is shorted out to be grounded or opened, and the terminal DVy is shorted out to the $V_{BAT}$ or opened because input information of the terminal TX is inputted so as to switch the driving circuit and the switching circuit. In this case, the transistor $Q_{SWX}$ corresponds to the SW1 to SW3, and the transistor $Q_{SWY}$ corresponds to the SW4 to SW6. Incidentally, the DV1 and DV2 are combined in FIG.14.

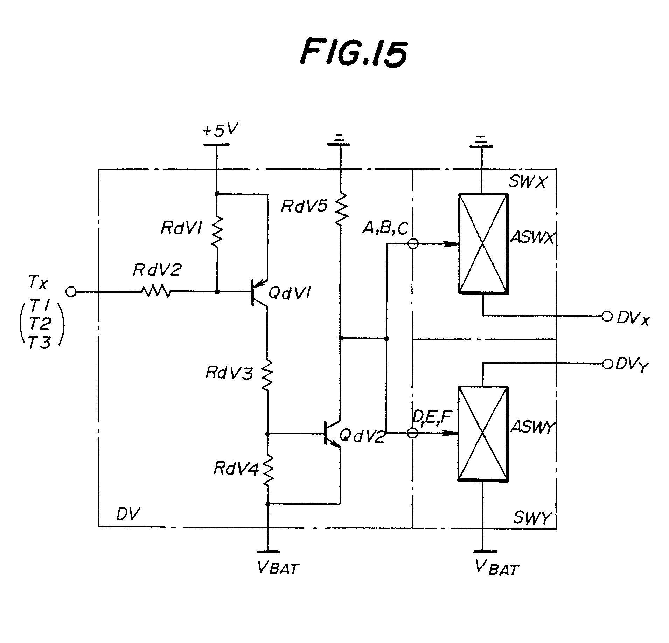

FIG.15 shows detailed circuit constructions of the DV1, DV2, and SW1 to SW6. The second and third embodiments in FIGs.6 and 7 use the three pairs of circuit shown in FIG.14.

A terminal Tx is respectively connected to the terminals T1, T2, and T3. The terminal DVx is connected to one of the resistors $R_{B2}$, $R_{B4}$, and $R_{B5}$. The terminal DVy is connected to one of the resistors $R_{A2}$, $R_{A4}$, and $R_{A5}$. The terminal Tx is connected to one end of the resistor $R_{dv2}$, and another end thereof is connected to a base of the transistor $Q_{dV1}$. The base of the transistor $Q_{dV1}$ is connected to a plus terminal of the power source (5V). And an emitter of the transistor $Q_{dV1}$ is connected to the plus terminal of the power source. On the other hand, the collector of the transistor $Q_{dV1}$ is connected to the $V_{BAT}$ via the resistors $R_{dv3}$ and $R_{dv4}$, and the joint point of the resistors $R_{dv3}$ and $R_{dv4}$ is connected to the base of the transistor $Q_{dV2}$. The emitter of the transistor $Q_{dV2}$ is connected to the $V_{BAT}$, and the collector of the transistor $Q_{dV2}$ is grounded via the resistor $R_{dv5}$. The collector of the transistor $Q_{dV2}$ is respectively connected to control input terminals of the analog switches ASWX and ASWY. The controlled electrode of the analog switch ASWX is grounded, and the controlled electrode of the analog switch ASWX is connected to the terminal DVx. The controlled electrode of the analog switch ASWY is connected to the $V_{BAT}$, and another controlled electrode of the analog switch ASWY is connected to the terminal DVy.

When "0" is inputted to the terminal Tx, the base current is supplied to the transistor $Q_{dV1}$ via the resistance $R_{dv2}$, so that the transistor $Q_{dV1}$ is turned on. Then the transistor $Q_{dV2}$ is switched on, and the analog switches ASWX and ASWY are turned on, respectively.

Thus, the terminal DVx is shorted out to be grounded or opened, and the terminal DVy is shorted out to the $V_{BAT}$ or opened because input information of the terminal TX is outputted so as to switch the driving circuit and the switching circuit. In this case, the analog switch ASWX corresponds to the SW1 to SW3, and the analog switch ASWY corresponds to the SW4 to SW6. Incidentally, the DV1 and DV2 are combined in FIG.15.

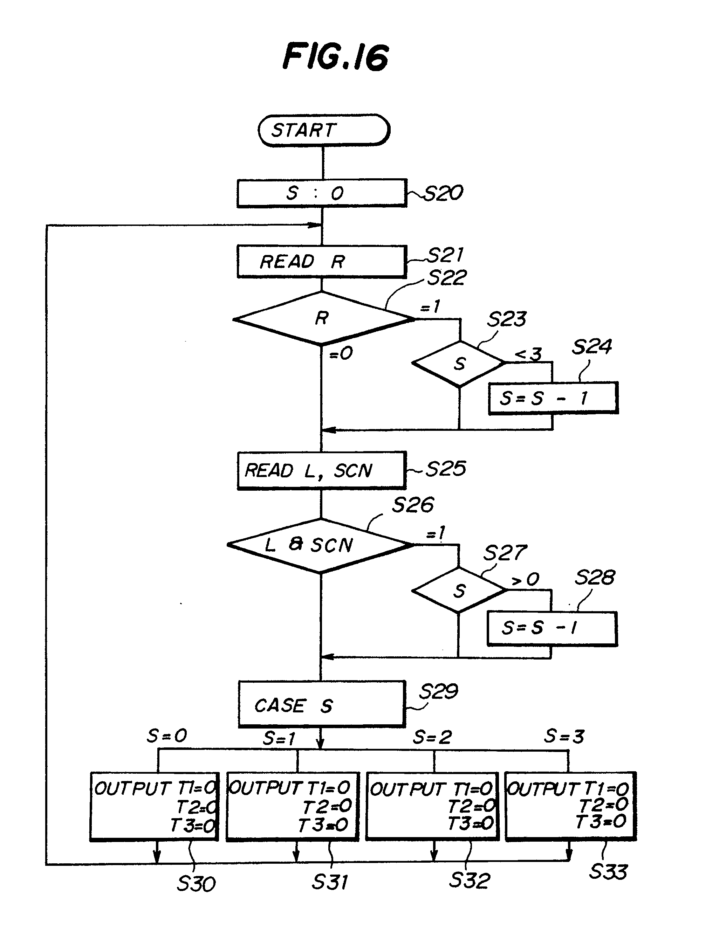

FIG 16 shows a flowchart showing how the DC power in the feed circuit in FIG.2 reveal the same characteristic as that in the feed circuit in FIG.5. Therefore, the feed circuit in FIG.2 can serve as that in FIG.5. First, the digital signal processor 21 in FIG.2 establishes S = 0 (in step S20) and reads and judges the level of the R input terminal (in steps 21 and 22). If the R input terminal is set at "1", the digital signal processor 21 judges whether or not S is smaller than 3 (in step S23). If S<3, the digital signal processor 21 adds 1 to S (in step S24). However, if S = 3 or the R input terminal is "0" (in the steps S21 and S22), then the digital signal processor 21 reads and judges the level of the L and SCN terminals (in steps S25 and S26). If both L and SCN terminals are "1", then the digital signal processor 21 judges whether or not the S is larger than 0 (in step S27). If S>0, the digital signal processor 21 subtracts 1 from S (in step S28). However, if both L and SCN terminals are not "1" or S<0 (in the steps S26 and S27), then the digital signal processor 21 respectively outputs predetermined values to the terminals T1, T2, and T3 based on the value of S (in steps S29 to S33).

Further, the present invention is not limited to these preferred embodiments, but various variations and modifications may be made without departing from the scope of the present invention.

## Claims

1. A feed circuit in an exchanger comprising feeding means for supplying DC power to a subscriber line, characterized in that there is provided feeding control means, coupled to said feeding means, for monitoring the DC power outputted from said feeding means to the subscriber line and for feedback-controlling said feeding means so that the DC power supplied from said feeding means can be automatically adjusted.

2. A feed circuit according to claim 1, characterized in that said feeding means comprises a pair of follower circuits, one of which is grounded and another of which is connected to a power supply.

3. A feed circuit according to claim 1, characterized in that said feeding control means comprises:
   a digital signal processor, coupled to an input and output of said feeding means, which feedback-controls said feeding means by means of digitally processing the DC power; and
   program input means, coupled to the digital signal processor, for inputting a predetermined program to the digital signal processor so that the digital signal processor digitally processes the DC power and feedback-controls said feeding means in accordance with the predetermined program.

4. A feed circuit according to claim 3, characterized in that the digital signal processor feedback-controls said feeding means so that the DC power to be outputted to the subscriber line reveals a constant-resistance characteristic.

5. A feed circuit according to Claim 3, characterized in that the digital signal processor feedback-controls said feeding means so that the DC power to be outputted to the subscriber line reveals a constant-current characteristic.

6. A feed circuit according to Claim 3, characterized in that the digital signal processor feedback-controls said feeding means so that the DC power to be outputted to the subscriber line reveals a terraced relationship between a composite resistance and a current of said feeding means viewed from the subscriber line.

7. A feed circuit according to Claim 3, characterized in that the program input means comprises a read only memory (ROM) which stores the predetermined program therein.

8. A feed circuit according to Claim 3, characterized in that said feeding control means further comprises an A/D converter, coupled to the output of said feeding means and an input of the digital signal processor, which converts the DC power into a first digital signal corresponding to the DC power so as to input the first digital signal to the digital signal processor, the digital signal processor digitally processing the first digital signal.

9. A feed circuit according to Claim 3, characeterized in that said feeding control means further comprises a D/A converter, coupled to the input of said feeding means and an output of the digital signal processor, which converts a second digital signal outputted from the digital signal processor into a predetermined voltage corresponding to the second signal so as to feedback-control said feeding means.

10. A feed circuit according to Claim 1, characeterized in that said feeding means comprises a pair of follower circuits, one of which is grounded and another of which is connected to a power supply, each follower circuit comprising:
   an operational amplifier;
   a resistor having one end coupled to the subscriber line and another end coupled to output and noninverting input terminals of the operation amplifier; and
   a transistor having a base coupled to the output terminal of the operational amplifier, a collector coupled to the other end of the resistor, and an emitter grounded or connected to the power supply; and
   that said feeding control means comprises:
   a digital signal processor which feedback-controls said feeding means by means of digitally processing the DC power;
   a pair of A/D converters, each of which is coupled to the resistor, the subscriber line and the input terminal of the digital signal, which respectively convert the DC power into a first digital signal corresponding to the DC power so as to input the first digital signal to the digital signal processor, the digital signal processor digitally processing the first digital signal and generating a second digital signal based on the first digital signal;
   a pair of D/A converters, each of which is coupled to an inverting input terminal of the operational amplifier and the output terminal of the digital signal which respectively convert the second digital signal outputted from the digital signal processor into a predetermined voltage corresponding to the second signal so as to feedback-control said feeding means; and
   program input means, coupled to the digital signal processor, for inputting a predetermined program to the digital signal processor, the program input means storing the predetermined program.

11. A feed circuit according to Claim 1, characterized in that said feeding means comprises a pair of follower circuits, one of which is grounded and another of which is connected to a power supply, each follower circuit comprising;
   an operational amplifier;
   a resistor having one end coupled to a noninverting input terminal of the operational amplifier and another end of which is grounded or connected to the power supply; and
   a transistor having a base coupled to the output terminal of the operational amplifier, a collector coupled to the other end of the resistor, and an emitter coupled to the subscriber line; and
   that said feeding control means comprises:
   a digital signal processor which feedback-controls said feeding means by means of digitally processing the DC power;
   a pair of A/D converters, each of which is coupled to the subscriber line and the input terminal of the digital signal, which respectively convert the DC power into a first digital signal corresponding to the DC power so as to input the first digital signal to the digital signal processor, the digital signal processor digitally processing the first digital signal and generating a second digital signal based on the first digital signal;
   a pair of D/A converters, each of which is coupled to an inverting input terminal of the operational amplifier and the output terminal of the digital signal which respectively convert the second digital signal outputted from the digital signal processor into a predetermined voltage corresponding to the second signal so as to feedback-control said feeding means; and

program input means, coupled to the digital signal processor, for inputting a predetermined program to the digital signal processor, the program input means storing the predetermined program.

12. A feed circuit according to Claim 10, characterized in that said feeding means further comprises follower circuit stabilizing means for equalize voltage between the collector and the emitter of each of the pair of transistors.

13. A feed circuit according to Claim 1, characterized in that said feeding control means further comprises:

DC power monitoring means for monitoring the DC power outputted to the subscriber line and for generating a detecting signal corresponding to the monitoring of the DC power;

control signal generation means, responsive to the DC power monitoring means, for generating a control signal based on the detecting signal; and

DC power adjusting means, responsive to the control signal generation means, for automatically adjusting the DC power based on the control signal.

14. A feed circuit according to Claim 13, characterized in that the DC power monitoring means outputs a first detecting signal to the control signal generation means if a voltage applied to the subscriber line is higher than a first threshold voltage, and outputs a second detecting signal to the control signal generation means if the voltage applied to the subscriber line is lower than a second threshold voltage, the first threshold voltage being higher than the second threshold voltage.

15. A feed circuit according to Claim 13, characterized in that said the DC power monitoring means comprises a low pass filter.

16. A feed circuit according to Claim 14, characterized in that the control signal generation means outputs a first control signal corresponding to the first detecting signal to increase a current flowing in the subscriber line, and outputs a second control signal corresponding to the second detecting signal to decrease the current flowing in the subscriber line.

17. A feed circuit according to Claim 16, characterized in that said control signal generation means comprises a delay circuit, the detecting signal inputted from the DC power monitoring means thereto being delayed and the control signal being generated based on the delayed detecting signal.

18. A feed circuit according to Claim 17, characterized in that said delay circuit comprises a timer.

19. A feed circuit according to Claim 16, characterized in that the control signal generation means comprises a clock generator, the first control signal being generated based on a first number of clocks while the first detecting signal is inputted thereto.

20. A feed circuit according to Claim 16, characterized in that the control signal generation means comprises a clock generator, the second control signal being generated based on a second number of clocks while the second detecting signal is inputted thereto.

21. A feed circuit according to Claim 19, characterized in that said control signal generation means comprises a shift register.

22. A feed circuit according to Claim 20, characterized in that said control signal generation means comprises an up/down counter.

23. A feed circuit according to Claim 13, characterized in that the DC power adjusting means adjusts composite resistance of the feeding means based on the control signal in order to adjust the DC power.

24. A feed circuit according to Claim 23, characterized in that the DC power adjusting means comprises:

a switch which opens and/or closes in accordance with the control signal outputted from the control signal generation means thereto; and

a resistance, coupled to the switch, which is not connected to said feeding means if the switch is opened, and is connected to said feeding means if the switch is closed.

25. A feed circuit according to Claim 24, characterized in that said resistance is directly connectable to the composite resistance of said feeding means.

26. A feed circuit according to Claim 24, characterized in that the resistance is connectable in a parallel manner to the composite resistance of

said feeding means.

FIG.1A

FIG.1B

# FIG. 2

POWER SUPPY

G

FEEDING MEANS

11

FEEDING CONTROL MEANS

13

SUBSCRIBER'S LINE

EP 0 446 944 A2

# FIG.3A

SUBSCRIBER TERMINAL

PROGRAM INPUT MEANS

DIGITAL SIGNAL PROCESSOR

D/A CONVERTER

A/D CONVERTER

A/D CONVERTER

D/A CONVERTER

-48V

EP 0 446 944 A2

## FIG.3B

SUBSCRIBER TERMINAL

$53_2$   $Re$   $G$

$50_2$

$52_2$

$54_2$

$54_1$

$50_1$

$52_1$

$53_1$   $Re$   $-48V$

$23_2$   D/A   CONVERTER

$22_2$   A/D   CONVERTER

$22_1$   A/D   CONVERTER

$23_1$   D/A   CONVERTER

DIGITAL SIGNAL PROCESSOR

$21$

$24$   PROGRAM INPUT MEANS

EP 0 446 944 A2

# FIG.4A

START

READ Via — S1

CALCULATE Voa — S2

OUTPUT Voa — S3

READ Vib — S4

CALCULATE Vob — S5

OUTPUT Vob — S6

END

# FIG.4B

```
              ┌──────────────┐
              │    START     │
              └──────┬───────┘
                     │
              ┌──────▼───────┐   ～S7
              │  READ Via    │
              └──────┬───────┘
                     │
              ┌──────▼───────┐   ～S8
              │ CALCULATE Voa│
              └──────┬───────┘
                     │
         S9 ╲    ◆───▼───◆        NO
             ╲  ╱ Voa < 0 ? ╲────────────┐
               ◆──────┬──────◆           │
                     │ YES               │
              ┌──────▼───────┐   S10     │
              │ CALCULATE Voa│           │
              └──────┬───────┘           │
                     │◄──────────────────┘
              ┌──────▼───────┐   ～S11
              │  OUTPUT Voa  │
              └──────┬───────┘
                     │
              ┌──────▼───────┐   ～S12
              │  READ  Vib   │
              └──────┬───────┘
                     │
              ┌──────▼───────┐   ～S13
              │ CALCULATE Vob│
              └──────┬───────┘
                     │
         S14     ◆───▼───◆        NO
             ╲  ╱ Vob < 0 ? ╲────────────┐
               ◆──────┬──────◆           │
                     │ YES    S15        │
              ┌──────▼───────┐           │
              │ CALCULATE Vob│           │
              └──────┬───────┘           │
                     │◄──────────────────┘
              ┌──────▼───────┐   ～S16
              │  OUTPUT Vob  │
              └──────┬───────┘
                     │
              ┌──────▼───────┐
              │     END      │
              └──────────────┘
```

# FIG.5

FIG.6

# FIG.7

# FIG.8

MAX  LINE- INSLATION  RESISTANCE

TRANSISTOR SATURATION VOLTAGE

$80^{mA}$

$60mA$

$I_L = 40^{mA}$

$I_L = 20^{mA}$

$V_{TH2}$ ------------------- MIN VOLTAGE

$V_{TH1}$ ------------------- MAX VOLTAGE

(V)

0

-10

-20

-30

-40

-50

0    0.5K    1K    1.5K    2K    2.5K    $R_L$ ($\Omega$)

EP 0 446 944 A2

# FIG.9

EP 0 446 944 A2

## FIG.10

# FIG.II

EP 0 446 944 A2

# FIG.12

EP 0 446 944 A2

## FIG.13

## FIG.14

# FIG.15

EP 0 446 944 A2

# FIG.16

```
                    ( START )
                        │
                ┌───────────────┐
                │    S : 0      │──S20
                └───────────────┘
                        │
    ┌──────────────────→│
    │           ┌───────────────┐
    │           │   READ  R     │──S21
    │           └───────────────┘
    │                   │        S22
    │                 ◇───────◇  =1
    │                ◇    R    ◇─────┐      S23
    │                 ◇───────◇      │    ◇───────◇  <3     S24
    │                  =0            └──◇    S    ◇─────┐
    │                   │              ◇───────◇        │
    │                   │                       ┌───────────────┐
    │                   │                       │  S = S - 1    │
    │                   │←──────────────────────└───────────────┘
    │           ┌───────────────┐
    │           │ READ L, SCN   │──S25
    │           └───────────────┘
    │                   │           S26
    │                 ◇───────◇   =1
    │                ◇  L & SCN ◇─────┐    S27
    │                 ◇───────◇       │  ◇───────◇  >0     S28
    │                   │             └─◇    S    ◇─────┐
    │                   │               ◇───────◇       │
    │                   │                      ┌───────────────┐
    │                   │                      │  S = S - 1    │
    │                   │←─────────────────────└───────────────┘
    │           ┌───────────────┐
    │           │    CASE S     │──S29
    │           └───────────────┘
    │   S=0        S=1        S=2        S=3
    │    │          │          │          │
  ┌──────────┐ ┌──────────┐ ┌──────────┐ ┌──────────┐
  │OUTPUT T1=0│ │OUTPUT T1=0│ │OUTPUT T1=0│ │OUTPUT T1=0│
  │     T2=0 │ │     T2=0 │ │     T2=0 │ │     T2=0 │
  │     T3=0 │ │     T3=0 │ │     T3=0 │ │     T3=0 │
  └──────────┘ └──────────┘ └──────────┘ └──────────┘
    │  S30       │  S31       │  S32       │  S33
```